(19) Europäisches Patentamt
European Patent Office
Office européen des brevets

(11) Veröffentlichungsnummer : **0 509 025 B1**

(12) **EUROPÄISCHE PATENTSCHRIFT**

(45) Veröffentlichungstag der Patentschrift :
**08.06.94 Patentblatt 94/23**

(51) Int. Cl.[5] : **G02F 1/1343,** G02F 1/133

(21) Anmeldenummer : **91902096.6**

(22) Anmeldetag : **09.01.91**

(86) Internationale Anmeldenummer :
**PCT/EP91/00022**

(87) Internationale Veröffentlichungsnummer :
**WO 91/10936 25.07.91 Gazette 91/17**

(54) **ELEKTROOPTISCHES FLÜSSIGKRISTALLSCHALTELEMENT.**

(30) Priorität : **09.01.90 DE 4000451**

(43) Veröffentlichungstag der Anmeldung :
**21.10.92 Patentblatt 92/43**

(45) Bekanntmachung des Hinweises auf die Patenterteilung :
**08.06.94 Patentblatt 94/23**

(84) Benannte Vertragsstaaten :
**DE FR GB**

(56) Entgegenhaltungen :
**US-A- 3 834 794**
**Journal of Applied Physics, Band 45, Nr. 12, December 1974, American Institute of Physics, R.A. Soref : "Field effects in nematic liquid crystals obtained with interdigital electrodes", Seiten 5466-5468**
**Proceedings of the IEEE, December 1974, R.A. Soref : "Interdigital twisted-nematic-displays", Seiten 1710-1711**

(73) Patentinhaber :
**FRAUNHOFER-GESELLSCHAFT ZUR FÖRDERUNG DER ANGEWANDTEN FORSCHUNG E.V.**
**Leonrodstrasse 54**
**D-80636 München (DE)**

(72) Erfinder : **BAUR, Günter**
**Waldhofstrasse 8d**
**D-7800 Freiburg (DE)**
Erfinder : **FEHRENBACH, Waltraud**
**Riedgaustrasse 11**
**d-8000 München 80 (DE)**
Erfinder : **STAUDACHER, Barbara**
**Münchgrund 8a**
**D-7637 Ettenheim (DE)**
Erfinder : **WINDSCHEID, Friedrich**
**Etzmattenstrasse 24**
**D-7800 Freiburg-Tiengen (DE)**
Erfinder : **KIEFER, Rudolf**
**Im Gottesacker 20**
**D-7801 Vörstetten (DE)**

(74) Vertreter : **Kraus, Walter, Dr.**
**Patentanwälte Kraus, Weisert & Partner**
**Thomas-Wimmer-Ring 15**
**D-80539 München (DE)**

**EP 0 509 025 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein elektrooptisches Flüssigkristallschaltelement, umfassend eine Flüssigkristallschicht mit wenigstens einem Substrat und einen Polarisator und Analysator sowie eine auf dem Substrat angeordnete Elektrodenstruktur zum Erzeugen eines elektrischen Feldes, welches eine überwiegend parallel zur Flüssigkristallschicht ausgerichtete Feldkomponente hat, wobei

(a) die Flüssigkristallschicht eine verdrillbare Struktur aufweist und die Richtung der Polarisation von Licht, welches durch die Flüssigkristallschicht hindurchgeht, vom Verdrillungsgrad der Flüssigkristallschicht abhängt;

(b) die Flüssigkristallschicht in einer Ausgangsorientierung verankert ist, in welcher ihre Verdrillungsachse senkrecht oder im wesentlichen senkrecht zur Flüssigkristallschicht bleibt; und

(c) die überwiegend parallel zur Flüssigkristallschicht ausgerichtete Feldkomponente der Elektrodenstruktur derart veränderbar ist, daß damit der Verdrillungsgrad der Flüssigkristallschicht verändert wird.

Ein elektrooptisches Flüssigkristallschaltelement, das eine Flüssigkristallschicht mit wenigstens einem Substrat und einen Polarisator und Analysator sowie eine auf dem Substrat angeordnete Elektrodenstruktur zum Erzeugen eines elektrischen Feldes, welches eine überwiegend parallel zur Flüssigkristallschicht ausgerichtete Feldkomponente hat, umfaßt, ist aus US-A-3 854 751 bekannt. Bei diesem Flüssigkristallschaltelement werden mit der felderzeugenden Elektrodenstruktur zwei elektrische Felder erzeugt, von denen das eine eine überwiegend parallel zur Flüssigkristallschicht ausgerichtete Feldkomponente hat, während das andere eine überwiegend senkrecht zur Flüssigkristallschicht ausgerichtete Feldkomponente besitzt, wobei die Flüssigkristallschicht mit dem einen elektrischen Feld in den Zustand minimaler Lichttransmission und mit dem anderen elektrischen Feld in den Zustand maximaler Lichttransmission geschaltet wird, indem die optische Achse des Flüssigkristalls durch das eine elektrische Feld senkrecht zur Flüssigkristallschicht und durch das andere elektrische Feld parallel zur Flüssigkristallschicht ausgerichtet wird. In den Fällen, in denen kompensierte colesterische Flüssigkristalle verwendet werden, die sich bei Abwesenheit von elektrischen Feldern spontan so orientieren, daß ihre optische Achse senkrecht zur Flüssigkristallschicht ausgerichtet ist, wird gegebenenfalls auf das eine elektrische Feld verzichtet, obwohl es nach US-A-3 854 751 auch in diesen Fällen zu bevorzugen ist, beide Felder zu verwenden, weil die Eigenausrichtungszeit der sich selbst orientierenden Flüssigkristalle relativ groß und damit sehr ungünstig ist.

Auch aus DE 24 59 533 A1 und DE 23 58 581 B2 sind elektrooptische Flüssigkristallschaltelemente bekannt, die eine Umorientierungseinrichtung mit einer felderzeugenden Struktur aufweisen, deren elektrisches Feld eine überwiegend parallel zur Flüssigkristallschicht ausgerichtete Feldkomponente hat. In dem Flüssigkristallschaltelement nach DE 23 28 581 B2 werden jedoch ähnlich wie in demjenigen nach US-A 2 854 751 zwei zueinander senkrechte elektrische Felder erzeugt, um die optische Achse des Flüssigkristalls in zwei senkrecht zueinander verlaufende Orientierungen auszurichten, von denen die eine parallel und die andere senkrecht zur Flüssigkristallschicht verläuft. Diese Art der Umorientierung der optischen Achse des Flüssigkristalls erfolgt auch in dem Flüssigkristallschaltelement gemäß DE 24 59 533 A1, wobei aber die zwangsweise Ausrichtung der optischen Achse des Flüssigkristalls senkrecht zur Flüssigkristallschicht mittels homöotroper Randorientierung des Flüssigkristalls erfolgt.

Schließlich ist auch aus WO 84/04601 in Verbindung mit einem Flüssigkristall eine kammartige felderzeugende Struktur bekannt, deren Feld eine überwiegend parallel zur Flüssigkristallschicht ausgerichtete Feldkomponente hat. Bei der Einrichtung nach dieser Druckschrift handelt es sich jedoch um einen Lichtleiter, bei dem die Lichtauskopplung durch eine Änderung des effektiven Brechungsindex des aus dem Flüssigkristall bestehenden Kerns oder der von dem Flüssigkristall gebildeten Umhüllung mittels der felderzeugenden Struktur gesteuert wird.

Aus JP 1-33521 (A) in Pat. Abstr. Jap. P-875, 23.05.89 Vol. 13 No. 219 ist es im übrigen bekannt, Elektroden in parallelen Ebenen anzuordnen, jedoch zu dem Zweck, einen speichernden Streuzustand in einem optischen Flüssigkristallmodulator zu erzeugen.

Weiter sind aus JP 1-179912 (A) in Pat. Abstr. Jap. P 946, 18.10.89, Vol. 13 No. 460 und JP 1-161217 (A) in Pat. Abstr. Jap. P-936, 25.9.89, Vol. 13 No. 428 Flüssigkristallanzeigeelementkomponenten bekannt, die dazu dienen, den Sperrzustand eines Displays zu verbessern, wobei verdrillte Flüssigkristalle mit einer bestimmten Ausrichtung verwendet werden. Außerdem beschreibt JP 1-44422 (A) in Pat. Abstr. Jap. P-880, 7.6.89, Vol. 13 No. 242 ein Flüssigkristallanzeigeelement, bei dem der nematische Flüssigkristall eine Orientierung mit einem Anstellwinkel von 20° bis 30° hat. Es handelt sich dabei jedoch um eine konventionelle Flüssigkristallstruktur, bei der durch Anlegen eines elektrischen Feldes die optische Achse des Flüssigkristalls zwischen einer zur Flüssigkristallschicht parallelen und senkrechten Richtung umgeschaltet wird.

Endlich sind aus GB 1 506 570 und JP 54-17756 (A) in Pat. Abstr. Jap. E-101, 30.3.79, Vol. 3 No. 38 Flüssigkristallanzeigeeinrichtungen mit optischem Kompensator oder Reflektor sowie mit dichroitischen Farbstoffen bekannt.

Weitere bekannte elektrooptische Flüssigkristallschaltelemente sind beispielsweise von M. Schadt und F. Leenhouts in "Appl. Phys. Lett.", Vol. 50, Seite 236 ff. (1987), sowie von T.J. Scheffer und J. Nehring in "J. Appl. Phys.", Vol. 58, Seite 3022 ff. (1985), ferner von L. Phl, G. Weber, R. Eidenschink, G. Baur und W. Fehrenbach in "Appl. Phys. Lett.", Vol 38, Seite 497 ff. (1981) und von M. Schadt und W. Helfrich in "Appl. Phys. Lett.", Vol 18, Seite 127 ff.(1971) beschrieben.

Weiter ist es aus dem Aufsatz von K. Fahrenschon et al.: "Deformation of a Pretilted Nematic Liquid Crystal Layer in an Electric Field" in Appl. Phys. 11 (1976), Seiten 67 bis 74 bekannt, Flüssigkristalle in elektrooptischen Flüssigkristallschaltelementen in ihrer Deformationsrichtung vorzudeformieren, so daß sich dadurch eine einheitliche Deformationsrichtung beim Anlegen des deformierenden elektrischen Feldes ergibt.

Elektrooptische Flüssigkristallschaltelemente werden insbesondere in Flüssigkristalldarstellungseinrichtungen, wie beispielsweise in Bildschirmen von Fernsehgeräten, Computern, Schaltzentralen und von anderen Einrichtungen, Anlagen o.dgl. zum Schalten der Bildpunkte dieser Flüssigkristalldarstellungseinrichtungen, d.h. zur Veränderung der Helligkeit und/oder Farbe eines Bildpunkts, verwendet.

Bei den Flüssigkristalldarstellungseinrichtungen oder -displays, welche mit elektrooptischen Flüssigkristallschaltelementen der vorstehenden bekannten Arten aufgebaut sind, ist der Beobachtungs- bzw. Betrachtungswinkelbereich, d.h. der Winkelbereich, aus dem heraus eine mittels der Flüssigkristalldarstellungseinrichtung erzeugte Darstellung ohne wesentliche optische Verfälschung wahrgenommen werden kann, erheblich eingeschränkt, weil der Kontrast der Darstellung ziemlich stark vom Betrachtungswinkel abhängt.

Diese Winkelabhängigkeit des Kontrasts der bekannten Flüssigkristalldarstellungseinrichtungen ist, wie hier beigefügte Untersuchungsergebnisse zeigen, eine Folge der bisherigen Umorientierung der optischen Achse der Flüssigkristallschicht zwischen einer Ausrichtung parallel zur Flüssigkristallschicht und einer Ausrichtung senkrecht zur Flüssigkristallschicht. Durch die Untersuchungen, die im Rahmen der vorliegenden Erfindung durchgeführt worden sind, wurde festgestellt, daß es die durch eine solche Umorientierung bewirkte Deformation des Flüssigkristalls ist, die eine stark ausgeprägte Winkelabhängigkeit der Transmission des Flüssigkristallschaltelements und damit des Kontrasts zur Folge hat.

Ein elektrooptisches Flüssigkristallschaltelement der eingangs genannten Art mit den dort angegebenen Merkmalen (a), (b) und (c), durch welches die Winkelabhängigkeit der Transmission und damit des Kontrasts weitestgehend beseitigt werden, ist aus den Arbeiten von R.A. Soref bekannt, nämlich aus dem Aufsatz "Field effects in nematic liquid crystals obtained with interdigital electrodes" im Journal of Applied Physics, Band 45, Nr. 12, Dezember 1974, American Institute of Physics, und aus dem Aufsatz "Interdigital twisted-nematic displays" in Proceedings of the IEEE, Dezember 1974, Seiten 1710-1711. Problematisch an diesen bekannten elektrooptischen Flüssigkristallschaltelementen ist es, daß sich beim Anlegen eines den Flüssigkristall deformierenden, d.h. ver- oder entdrillenden elektrischen Feldes Bereiche unterschiedlicher Deformation des Flüssigkristalls in Abhängigkeit davon ergeben, ob der jeweilige Berich ein interdigitaler Bereich ist, d.h. sich zwischen den Kammelektroden der felderzeugenden Elektrodenstruktur befindet, oder ein intradigitaler Bereich, d.h. sich innerhalb des Bereichs der Kammelektroden erstreckt. Durch diese Bereiche unterschiedlicher Deformation des Flüssigkristalls, die dadurch verursacht werden, daß die beim Anlegen des elektrischen Feldes erzielbare Deformierbarkeit des Flüssigkristalls in unmittelbarer Nähe der bei den Kammelektroden befindlichen Verankerungsschicht für den Flüssigkristall schlecht ist, kommt es zu einer unerwünschten und optisch störenden Strukturbildung in der Flüssigkristallschicht sowie dazu, daß je nach der Polarisator-Analysator-Anordnung (parallel oder senkrecht zueinander) beim Anlegen eines elektrischen Feldes entweder keine ausreichende Sperrung oder keine zufriedenstellende Transmission des elektrooptischen Flüssigkristallschaltelements erzielbar ist, selbst wenn man ein verhältnismäßig hohes elektrisches Feld anlegt. Das bedeutet, daß solche elektrooptischen Flüssigkristallschaltelemente entweder einen unbefriedigenden Kontrast oder eine verminderte Helligkeit haben.

Aufgabe der Erfindung ist es, ein elektrooptisches Flüssigkristallschaltelement zur Verfügung zu stellen, das gleichzeitig sowohl im wesentlichen eine Betrachtungswinkelunabhängigkeit der Transmission und des Kontrastes als auch eine günstige Deformierbarkeit der Flüssigkristallschicht durch das angelegte elektrische Feld in unmittelbarer Nähe ihrer Verankerungsschicht aufweist.

Diese Aufgabe wird mit einem elektrooptischen Flüssigkristallschaltelement der eingangs genannten Art gelöst, welches sich dadurch auszeichnet, daß die Ausgangsorientierung der Flüssigkristallschicht zumindest auf ihrer der Elektrodenstruktur zugewandten Schichtseite einen Anstellwinkel, der größer als 0° und kleiner als 30° ist, mit einer zur Flüssigkristallschicht parallelen Ebene einschließt, so daß sich eine Deformierbarkeit der Flüssigkristallschicht beim Anlegen des elektrischen Feldes in unmittelbarer Nähe der Verankerung der Flüssigkristallschicht ergibt.

Auf diese Weise wird ein elektrooptisches Flüssigkristallschaltelement erhalten, das nicht nur eine im wesentlichen winkelunabhängige Transmission und einen im wesentlichen winkelunabhängigen Kontrast hat, sondern das darüberhinaus auch eine günstige Deformierbarkeit des Flüssigkristalls beim Anlegen des elektrischen Feldes in unmittelbarer Nähe der Verankerungsschicht für den Flüssigkristall aufweist.

Die Angabe, daß die Verdrillungsachse "im wesentlichen" senkrecht zur Flüssigkristallschicht bleibt und daß die optische Achse "im wesentlichen" parallel zur Flüssigkristallschicht verdreht wird, soll infolgedessen besagen, daß ein gewisser Anstellwinkel $\alpha_o$ mehr als 0° und 30° vorgesehen ist, den die Ausgangsorientierung der Flüssigkristallschicht zumindest auf ihrer der felderzeugenden Elektrodenstruktur zugewandten Schichtseite der Flüssigkristallschicht mit einer zur Flüssigkristallschicht parallelen Ebene einschließt, wobei hier unter der Ausgangsorientierung der Flüssigkristallschicht die Vorzugsrichtung der Molekülachsen des Flüssigkristalls in der Ausgangsorientierung der Flüssigkristallschicht verstanden wird.

Vorzugsweise ist das erfindungsgemäße Flüssigkristallschaltelement so ausgebildet, daß die überwiegend parallel zur Flüssigkristallschicht ausgerichtete Feldkomponente der felderzeugenden Elektrodenstruktur derart veränderbar ist, daß zur kontinuierlichen oder stufenweisen Einstellung unterschiedlicher Lichttransmissionsgrade im Bereich zwischen im wesentlichen maximaler und minimaler Lichttransmission der Verdrillungsgrad der Flüssigkristallschicht kontinuierlich oder stufenweise verändert wird.

Wie die hier beigefügten Untersuchungsergebnisse über die Winkelabhängigkeit der Transmission bei erfindungsgemäßen Flüssigkristallschaltelementen zeigen, ist die Transmission bei den erfindungsgemäßen Flüssigkristallschaltelementen praktisch nicht winkelabhängig.

Das elektrische Feld mit der überwiegend parallel zur Flüssigkristallschicht ausgerichteten Feldkomponente kann dadurch erhalten werden, daß die felderzeuqende Elektrodenstruktur Streifenoder Linienelektroden umfaßt, die parallel zueinander und parallel zur Flüssigkristallschicht verlaufen und alternierend mit einem unterschiedlichen elektrischen Potential beaufschlagt sind.

Bevorzugte Ausbildungen einer solchen felderzeugenden Elektrodenstruk tur sind so ausgebildet, daß

(a) die Streifen- oder Linienelektroden alternierend in wenigstens zwei zur Flüssigkristallschicht parallelen Ebenen angeordnet sind, wobei die beiden Ebenen insbesondere von den beiden entgegengesetzten Oberflächen einer isolierenden Folie, Dünnplatte, Schicht o. dgl. gebildet sein können; oder

(b) die mit unterschiedlichem Potential beaufschlagten Streifen- oder Linienelektroden kammartig ineinandergreifend in der gleichen Ebene angeordnet sind, wobei diese Ebene insbesondere von der der Flüssigkristallschicht zugewandten Oberfläche eines die Flüssigkristallschicht begrenzenden Substrats oder einer auf ein solches Substrat aufgebrachten isolierenden Folie, Dünnplatte, Schicht o. dgl. gebildet sein kann.

Eine Weiterbildung des elektrooptischen Flüssigkristallschaltelements nach der Erfindung zeichnet sich dadurch aus, daB die überwiegend parallel zur Flüssigkristallschicht ausgerichtete Feldkomponente einen Ausrichtungswinkel, der größer als 0° und kleiner als 90° ist, mit der Vorzugsrichtung bildet, welche die Flüssigkristallschicht auf ihrer der felderzeugenden Elektrodenstruktur zugewandten Schichtseite in ihrer Ausgangsorientierung hat. Auf diese Weise wird einerseits eine Domänenbildung durch unterschiedlichen Drehsinn von benachbarten Flüssigkristallschaltelementen oder -elementbereichen verhindert, und andererseits werden kurze Schaltzeiten erreicht, da sich durch den spitzen Winkel zwischen der überwiegend parallel zur Flüssigkristallschicht verlaufenden Feldkomponente und der Ausgangsorientierung der Flüssigkristallschicht auf ihrer der felderzeugenden Elektrodenstruktur zugewandten Schichtseite ein eindeutig gerichtetes Anfangsdrehmoment genügender Größe beim Einschalten des elektrischen Feldes ergibt, durch das der Drehsinn vorgegeben und damit das Flüssigkristallschaltelement in kürzestmöglicher Zeit geschaltet wird.

Bevorzugt ist dieses Flüssigkristallschaltelement so ausgebildet, daß

(a) der Ausrichtungswinkel bei positiver Dielektrizitätsanisotropie des Flüssigkristalls größer als 70° und kleiner als 90° ist, oder daß

(b) der Flüssigkristall eine negative Dielektrizitätsanisotropie hat, wobei der Ausrichtungswinkel kleiner als 20° und größer als 0° ist.

Bei Verwendung von Flüssigkristallmaterialien mit positiver Dielektrizitätsanisotropie $\Delta\varepsilon$ wird nämlich ein Drehmoment in duziert, das die Vorzugsrichtung (Direktor) des Flüssigkristalls in Richtung des elektrischen Feldes dreht, während bei Verwendung von Flüssigkristallmaterialien mit negativer Dielektrizitätsanisotropie ein Drehmoment induziert wird, das die Vorzugsrichtung (Direktor) in eine Ebene senkrecht zur Richtung des elektrischen Feldes dreht. Der Ausrichtungswinkel sollte hierbei, wie oben angegeben, mit Rücksicht auf elektrooptische Kennlinien und Schaltzeiten bei positivem $\Delta\varepsilon$ nicht kleiner als $|70°|$ und bei negativem $\Delta\varepsilon$ nicht größer als $|20°|$ sein.

Besonders bevorzugt ist in dem erfindungsgemäßen Flüssigkristallschaltelement ein Flüssigkristallmaterial, insbesondere ein nichtferroelektrisches Flüssigkristallmaterial, von negativer Dielektrizitätsanisotropie $\Delta\varepsilon$ vorgesehen, da sich hierdurch eine weitere Art von Domänenausbildung ausschalten läßt, wenn das elektrische Feld außer der parallel zur Flüssigkristallschicht ausgerichteten Komponente auch eine senkrecht hierzu orientierte Komponente hat, was in der Praxis meist der Fall ist. Ein solcher Fall liegt zum Beispiel vor, wenn das elektrische Feld, wie es bevorzugt geschieht, durch Streifen- oder Linienelektroden erzeugt wird, denn dann ist gleichzeitig zur Komponente, die parallel oder nahezu parallel zur Flüssigkristallschicht verläuft, auch eine bei hohen Feldern ebenfalls wirksame Komponente senkrecht zur Flüssigkristallschicht vorhanden. Bei Flüssigkristallmaterialien mit positivem $\Delta\varepsilon$ führt dies bei hohen Feldern zu einer Umorientierung des Flüssigkristalls, bei welcher die Vorzugsrichtung aus der Ebene der Flüssigkristallschicht herausgedreht wird. Dies ist mit einer Domänenbildung verbunden und in vielen Fällen unerwünscht, so daß nur der untere Bereich der elektrooptischen Kennlinie nutzbar wird. Bei Materialien mit negativem $\Delta\varepsilon$ induziert diese Feldkomponente ein Drehmoment, das die Vorzugsrichtung des Flüssigkristalls in die Ebene der Flüssigkristallschicht dreht. Damit wird das vorstehend beschriebene Umorientieren verhindert, und es wird ein wesentlich größerer Teil der elektrooptischen Kennlinie nutzbar.

Hinsichtlich der Ausgangsorientierung des Flüssigkristalls wird es bevorzugt, daß

(a) der Flüssigkristall in seiner Ausgangsorientierung eine unverdrillte Struktur aufweist und durch die überwiegend parallel zur Flüssigkristallschicht ausgerichtete Feldkomponente in eine verdrillte Struktur umorientierbar ist, bei der die Verdrillungsachse senkrecht zur Flüssigkristallschicht ist, oder daß

(b) der Flüssigkristall in seiner Ausgangsorientierung eine verdrillte Struktur aufweist, deren Verdrillungsachse senkrecht zur Flüssigkristallschicht ist und die durch die überwiegend parallel zur Flüssigkristallschicht ausgerichtete Feldkomponente entdrillbar ist.

Der sonstige grundsätzliche Aufbau des Flüssigkristallschaltelements ist bevorzugt so ausgebildet, daß

(1) zum Betreiben des elektrooptischen Flüssigkristallschaltelements in Durchlichtbetriebsweise auf der einen Seite der Flüssigkristallschicht ein Polarisator und auf der anderen Seite ein Analysator vorgesehen ist; oder daß

(2) zum Betreiben des elektrooptischen Flüssigkristallschaltelements in Reflexionsbetriebsweise auf der einen Seite der Flüssigkristallschicht ein Polarisator/Analysator und auf der anderen Seite ein Reflektor vorgesehen ist.

Hierbei kann ein doppelbrechender optischer Kompensator zwischen der Flüssigkristallschicht und dem Polarisator vorgesehen sein. Der optische Kompensator kann dort, wo, wie im ersteren Fall, ein gesonderter Analysator vorgesehen ist, stattdessen auch zwischen der Flüssigkristallschicht und dem Analysator vorgesehen sein.

Insbesondere kann die Flüssigkristallschicht einen dichroitischen Farbstoff enthalten und auf wenigstens einer Seite derselben ein Polarisator vorgesehen sein.

Vorzugsweise ist das Flüssigkristallschaltelement weiter so ausgebildet, daß dessen Lichttransmission in der Ausgangsorientierung der Flüssigkristallschicht ihren maximalen oder minimalen Betrag hat und in umorientierten Zuständen der Flüssigkristallschicht bis zu ihrem anderen Extremwert veränderbar ist.

Besonders bevorzugt wird das erfindungsgemäße Flüssigkristallschaltelement zur Veränderung der Helligkeit und/oder Farbe eines Bildpunkts einer elektrooptischen Darstellungseinrichtung verwendet, wobei diese letztere vorzugsweise ein Bildschirm ist. Die Flüssigkristallschaltelemente der elektrooptischen Darstellungseinrichtung können insbesondere durch eine Transistormatrix oder durch eine Direktansteuereinrichtung im Zeitmultiplexverfahren angesteuert sein.

Die vorstehenden sowie weitere Vorteile und Merkmale der Erfindung seien nachfolgend anhand von bevorzugten Ausführungsformen von erfindungsgemäßen elektrooptischen Flüssigkristallschaltelementen unter Bezugnahme auf die Figuren 1 bis 7 der Zeichnung näher erläutert, welche, soweit sie den Aufbau von bevorzugten Ausführungsformen von elektrooptischen Flüssigkristallschaltelementen nach der Erfindung zeigen, aus Darstellungsgründen absichtlich nicht maßstabsgerecht gezeichnet sind; es zeigen:

Figur 1 — einen Teilschnitt durch eine Ausführungsform eines elektrooptischen Flüssigkristallschaltelements nach der Erfindung, das bevorzugt einen Bildpunkt einer elektrooptischen Darstellungseinrichtung bildet, indem es die Helligkeit und/oder Farbe dieses Bildpunkts steuert, so daß also der Bildschirm einer elektrooptischen Darstellungseinrichtung eine Vielzahl solcher Flüssigkristallschaltelemente umfaßt, die in einer flächigen Matrixanordnung integriert sind;

Figur 2 — eine perspektivische Ansicht einer Ausführungsform eines elektrooptischen Flüssigkristallschaltelements nach der Erfindung für Durchlichtbetriebsweise, wobei die einzelnen Teile, abgesehen von der nur durch Orientierungspfeile angedeuteten Flüssigkristallschicht, im auseinandergezogenen Zustand dargestellt sind;

Figur 3 — eine perspektivische Darstellung einer Ausführungsform eines elektrooptischen Flüssigkristallschaltelements nach der Erfindung für Reflexionsbetriebsweise, wobei ebenfalls die einzelnen Teile, abgesehen von der nur durch Orientierungspfeile angedeuteten Flüssigkristallschicht, im auseinandergezogenen Zustand gezeichnet sind;

Figur 4 — eine perspektivische Darstellung einer weiteren erfindungsgemäßen Ausführungsform;

Figur 5 eine schematische Darstellung des Anstellwinkels $\alpha_o$, den die Ausgangsorientierung der Flüssigkristallschicht bevorzugt mit einer zur Flüssigkristallschicht parallelen Ebene einschließt, sowie des Ausrichtungswinkels $\beta_o$, den die überwiegend parallel zur Flüssigkristallschicht ausgerichtete Feldkomponente des den Flüssigkristall umorientierenden elektrischen Feldes vorzugsweise mit der Ausgangsorientierung bildet, welche die Flüssigkristallschicht auf ihrer der felderzeugenden Struktur zugewandten Schichtseite hat;

Figur 6 eine experimentell ermittelte Kurve, welche die Transmission des senkrecht einfallenden Lichts in Abhängigkeit von der angelegten Spannung bei einem typischen Ausführungsbeispiel eines elektrooptischen Flüssigkristallschaltelements nach der Erfindung zeigt;

Figur 7 rechnerisch ermittelte Werte für die Transmission bei einem typischen Ausführungsbeispiel eines erfindungsgemäßen elektrooptischen Flüssigkristallschaltelements, welche zeigen, daß dieses weitestgehend keine Winkelabhängigkeit der Transmission und des Kontrasts hat;

Figur 8 rechnerisch ermittelte Transmissionswerte bei einem bekannten elektrooptischen Flüssigkristallschaltelement, einer sogenannten TN-Zelle, welche in Polarkoordinaten die Winkelabhängigkeit der Transmission veranschaulichen, wobei der Darstellungsmaßstab genau der gleiche wie in Figur 6 ist, so daß aus einem Vergleich zwischen den beiden Figuren 6 und 7 deutlich wird, welche hohe Winkelabhängigkeit der Transmission bei der bekannten TN-Zelle vorliegt und daß demgegenüber bei dem erfindungsgemäßen elektrooptischen Flüssigkristallschaltelement in einem großen Bereich praktisch keine Winkelabhängigkeit der Transmission vorhanden ist.

In der nun folgenden detaillierten Beschreibung von bevorzugten Ausführungsformen der Erfindung sei zunächst auf die Figuren 1 und 2 Bezug genommen, von denen die Figur 1 einen Querschnitt durch eine Ausführungsform eines elektrooptischen Flüssigkristallschaltelements für Durchlichtbetriebsweise im zusammengebauten Zustand zeigt, während die Figur 2 dieses gleiche Flüssigkristallschaltelement im auseinandergezogenen Zustand der einzelnen Teile desselben sowie in einem gegenüber Figur 1 verkleinerten Maßstab veranschaulicht, wobei außerdem in Figur 2 die untere Orientierungsschicht und die untere Isolierschicht im Gegensatz zu der Figur 1 aus Darstellungsgründen als ebene Schichten gezeichnet sind.

Das elektrooptische Flüssigkristallschaltelement 1 für Durchlichtbetriebsweise, wie es in den Figuren 1 und 2 dargestellt ist, umfaßt eine Flüssigkristallschicht 2, die zwischen zwei Substraten 3 und 4 eingeschlossen ist, die entsprechend der zeichnerischen Darstellung nachstehend als unteres und oberes Substrat bezeichnet werden, obwohl sie in der Praxis jede beliebige Lage haben können. Vorzugsweise sind diese Substrate 3 und 4 Glassubstrate, sie können jedoch auch aus anderen geeigneten durchsichtigen, bevorzugt isolierenden, Materialien, wie beispielsweise Kunststoffen, bestehen. Außerdem sind die Substrate 3 und 4 bevorzugt eben ausgebildet und parallel zueinander angeordnet, so daß die Flüssigkristallschicht 2 bevorzugt eine im wesentlichen ebene bzw. planare Schicht ist.

Um die Flüssigkristallschicht 2 mit einer vorbestimmten Ausgangsorientierung in dem Flüssigkristallschaltelement 1 zu halten, grenzt sie nicht unmittelbar an die beiden Substrate 3 und 4 an, sondern vielmehr an je eine Orientierungsschicht 5 und 6, die nachstehend aufgrund der zeichnerischen Darstellung als untere und obere Orientierungsschicht bezeichnet sind. Die obere Orientierungsschicht 6 ist unmittelbar auf das obere Substrat 4 aufgebracht, während dagegen zwischen dem unteren Substrat 3 und der unteren Orientierungsschicht 5 eine felderzeugende Struktur 7 und gegebenenfalls eine Isolierschicht 8 vorgesehen ist, so daß auf das untere Substrat 3 die felderzeugende Struktur 7, die Isolierschicht 8 und die untere Orientierungsschicht 5 in der vorstehend angegebenen Reihenfolge aufgebracht sind.

Die felderzeugende Struktur 7 umfaßt Streifen- oder Linienelektroden 9 und 10, die parallel zueinander und parallel zur Flüssigkristallschicht 2 verlaufen. Hierbei wechseln die Streifen- oder Linienelektroden 9 mit den Streifen- oder Linienelektroden 10 ab, wie die Figuren 1 und 2 zeigen, wobei die Streifen- oder Linienelektroden 9 an ein gegenüber den Streifen- oder Linienelektroden 10 unterschiedliches elektrisches Potential angeschlossen sind, so daß zwischen den Streifen- oder Linienelektroden 9 und 10 jeweils ein elektrisches Feld erzeugt wird, das eine überwiegend parallel zur Flüssigkristallschicht 2 ausgerichtete Feldkomponente hat. Beispielsweise sind, wie Figur 2 zeigt, die Streifenoder Linienelektroden 9 an den einen Pol einer Spannungsquelle 11 angeschlossen, während die Streifen- oder Linienelektroden 10 an den anderen Pol dieser Spannungsquelle 11 angeschlossen sind. Obwohl die Spannungsquelle 11 aus prinzipiellen Gründen als Gleichstromquelle dargestellt ist und im Prinzip auch eine solche Gleichstromquelle sein könnte, wird in der Praxis zur Vermeidung einer Degradation der Flüssigkristallschicht und der damit verbundenen Schwierigkeiten eine Wechselstrom-Spannungsquelle 11 verwendet.

Die Streifen- oder Linienelektroden 9 und 10 sind in der vorliegend dargestellten Ausführungsform des Flüssigkristallschaltelements 1 kammartig ineinandergreifend in der gleichen Ebene, nämlich auf der Oberfläche einer isolierenden Basisschicht 12, die auch von der Oberfläche des Substrats 3 gebildet sein kann, ausgebildet, indem die Streifen- oder Linienelektroden 9 durch eine quer, insbesondere senkrecht, dazu verlaufende streifen- oder linienförmige Querelektrode 13 elektrisch miteinander zu einer ersten Kammstruktur verbunden sind, und indem die Streifen- oder Linienelektroden 10 durch eine quer, insbesondere senkrecht, zu ihnen verlaufende weitere streifen- oder linienförmige Querelektrode 14 elektrisch zu einer zweiten Kammstruktur miteinander verbunden sind, und indem ferner die beiden Kammstrukturen ineinandergreifend angeordnet sind, wie besonders gut aus den Figuren 2 und 3 ersichtlich ist.

Eine andere, in den Figuren der Zeichnung nicht dargestellte Möglichkeit besteht darin, die Streifen- oder Linienelektroden 9 auf der Oberseite der isolierenden Basisschicht 12 anzuordnen, während die Streifen- oder Linienelektroden 10 auf der Unterseite der isolierenden Basisschicht 12 angeordnet werden, oder umgekehrt. In diesem Fall können die Streifen- oder Linienelektroden als einfache parallele Streifen oder Linien ausgebildet sein, ohne daß kammartige Strukturen benötigt werden.

Außerdem umfaßt das in den Figuren 1 und 2 dargestellte Flüssigkristallschaltelement 1 noch einen Polarisator 15 auf der Außenseite des Substrats 3 und einen Analysator 16 auf der Außenseite des Substrats 4. Je nach der Lichtdurchgangsrichtung können auch Polarisator und Analysator vertauscht sein. Schließlich ist noch ein optischer Kompensator 17 zwischen dem Polarisator 15 und dem Substrat 3 vorgesehen. Dieser optische Kompensator 17 kann stattdessen auch zwischen dem Analysator 16 und dem Substrat 4 angeordnet sein.

Die Figur 3 zeigt eine perspektivische Ansicht einer Ausführungsform eines elektrooptischen Flüssigkristallschaltelements 18 für Reflexionsbetriebsweise in auseinandergezogener Darstellung der einzelnen Teile dieses Flüssigkristallschaltelements 18, das sich in seinem äußeren Aufbau von dem Flüssigkristallschaltelement 1 gemäß den Figuren 1 und 2 lediglich dadurch unterscheidet, daß anstelle des in den Figuren 1 und 2 gezeigten Analysators 16 ein Reflektor 19 vorgesehen ist, der in der dargestellten Ausführungsform aus einem Substrat 20, beispielsweise einem Glassubstrat, und einer Reflexionsschicht 21 besteht, die auf der der Flüssigkristallschicht 2 zugewandten Seite des Substrats 20 vorgesehen ist. Entsprechend diesem Aufbau ist der nunmehr noch verbleibende Polarisator gleichzeitig auch der Analysator und wird demgemäß zur Unterscheidung von den Figuren 1 und 2 als Polarisator/Analysator 22 bezeichnet.

Eine weitere Ausführungsform eines elektrooptischen Schaltelements 28 für Reflexionsbetriebsweise, die in Figur 4 dargestellt ist, unterscheidet sich von dem elektrooptischen Schaltelement 1 gemäß Figuren 1 und 2 zum Beispiel dadurch, daß in den Figuren 1 und 2 anstelle der Isolierschicht 8 ein dielektrischer Spiegel 8a vorgesehen ist und der doppelbrechende Kompensator 17 gegebenenfalls zwischen Substrat 4 und Analysator 16 vorgesehen ist. Als Analysator 16 ist ein Analysator/Polarisator 22 vorgesehen, der dann als Polarisator und Analysator wirkt, so daß der Polarisator 15 der Figuren 1 und 2 entfällt. Diese Ausführungsform hat insbesondere den Vorteil, daß weder die Elektrodenstruktur 7 noch das Substrat 3 transparent zu sein brauchen, wenn der dielektrische Spiegel 8a zwischen dem Flüssigkristall 2 einerseits und der Anordnung aus der Elektrodenstruktur 7 und dem Substrat 3 andererseits vorgesehen ist, wie Figur 4 zeigt, wobei sich die Orientierungsschicht 5 zwischen dem Flüssigkristall 2 und dem dielektrischen Spiegel 8a befindet. Die Orientierungsschicht 5 kann auch Bestandteil des dielektrischen Spiegels 8a sein. Die Elektrodenstruktur 7 kann auch auf dem dielektrischen Spiegel 8a, insbesondere auf dessen dem Flüssigkristall 2 zugewandten Seite, vorgesehen sein.

Im übrigen sind, da der äußere Aufbau des Flüssigkristallschaltelements 18 und 28 ansonsten gleich demjenigen des Flüssigkristallschaltelements 1 ist, die gleichen Bezugszeichen wie in den Figuren 1 und 2 verwendet, und insofern wird zur Vermeidung von Wiederholungen auf die entsprechenden Erläuterungen zu den Figuren 1 und 2 verwiesen.

Es sei nun näher auf den inneren Aufbau der Flüssigkristallschaltelemente 1, 18 und 28 eingegangen, das heißt auf die jeweiligen für den Betrieb des Flüssigkristallschaltelements 1, 18 und 28 wichtigen Parameter der Flüssigkristallschicht, der Orientierungsschichten, der Polarisatoren, der felderzeugenden Struktur etc., die in der nachfolgenden Tabelle 1 angegeben und, soweit möglich, in den Figuren 2 und 3 eingezeichnet sind:

## Tabelle 1

Zur Beschreibung von bevorzugten Ausführungsformen der Flüssigkristallschaltelemente hinsichtlich ihrer physikalischen Ausbildung werden folgende Parameter verwendet:

$\beta$ = Verdrillungswinkel des Flüssigkristalls 2 in dessen Ausgangsorientierung, das heißt Winkel zwischen dem Direktor am Substrat 3 bzw. in der Orientierungsschicht 5 und dem Direktor am Substrat 4 bzw. in der Orientierungsschicht 6.

$\beta_o$ = Ausrichtungswinkel, der überwiegend parallel zur Flüssigkristallschicht 2 ausgerichteten elektrischen Feldkomponente, die von der felderzeugenden Struktur 7 erzeugt wird, zu der Vorzugsrichtung der Molekülachsen des Flüssigkristalls 2, die diese in der Ausgangsorientierung des Flüssigkristalls 2 auf der Schichtseite der Flüssigkristallschicht 2 haben, welche der felderzeugenden Struktur 7 zugewandt ist, also an der Orientierungsschicht 5; dieser Winkel ist gleich dem Winkel zwischen dem Direktor am Substrat 3 bzw. in der Orientierungsschicht 5 und der Senkrechten zu der Längsrichtung der Streifen- oder Linienelektroden 9, 10 in der Ebene dieser Streifen- oder Linienelektroden.

| | | |
|---|---|---|
| $\alpha_o$ | = | Anstellwinkel, den die Ausgangsorientierung der Flüssigkristallschicht 2 zumindest auf ihrer der felderzeugenden Struktur 7 zugewandten Schichtseite der Flüssigkristallschicht 2 mit einer zur Flüssigkristallschicht 2 parallelen Ebene einschließt, wobei hier unter der Ausgangsorientierung der Flüssigkristallschicht die Vorzugsrichtung der Molekülachsen des Flüssigkristalls 2 in der Ausgangsorientierung der Flüssigkristallschicht verstanden wird. |
| $\psi$ | = | Winkel zwischen dem Direktor an dem Substrat 3 bzw. in der Orientierungsschicht 5 und der Durchlaßrichtung des Polarisators 15 bzw. des Polarisators/Analysators 22. |
| $\psi'$ | = | Winkel zwischen dem Direktor an dem Substrat 3 bzw. in der Orientierungsschicht 5 und der Durchlaßrichtung des Analysators 16. |
| $\vert\psi - \psi'\vert$ | = | Winkel zwischen der Durchlaßrichtung von Polarisator und Analysator |
| d | = | Dicke der Flüssigkristallschicht 2 |
| $\varepsilon_{\parallel}$, $\varepsilon_{\perp}$ | = | Dielektrizitätskonstanten parallel bzw. senkrecht zum Direktor des Flüssigkristalls |
| $\Delta\varepsilon$ | = | Dielektrizitätsanisotropie des Flüssigkristalls = Differenz zwischen $\varepsilon_{\parallel}$ und $\varepsilon_{\perp}$ d.h. $\Delta\varepsilon = \varepsilon_{\parallel} - \varepsilon_{\perp}$ |
| $n_o$, $n_e$ | = | ordentlicher bzw. außerordentlicher Brechungsindex des Flüssigkristalls |
| $\lambda$ | = | Lichtwellenlänge |
| $\Delta n$ | = | $n_e - n_o$ |

In den Figuren 2 und 3 sind durch die Pfeile 23 bis 27 Vorzugsrichtungen des Flüssigkristalls 2 angedeutet, wobei insbesondere durch den Pfeil 23 die Vorzugsrichtung an der Orientierungsschicht 5 und durch den Pfeil 27 die Vorzugsrichtung an der Orientierungsschicht 6 angedeutet ist, während die Pfeile 24, 25 und 26 Vorzugsrichtungen im Zwischenbereich darstellen, die zur besseren Veranschaulichung der Flüssigkristallverdrillung eingezeichnet sind. Der Anstellwinkel $\alpha_o$ und der Ausrichtungswinkel $\beta_o$ sind in Figur 5 dargestellt, wobei die x- und y-Achse eine parallel zur Flüssigkristallschicht 2 verlaufende Ebene definieren, während die z-Achse senkrecht zur Flüssigkristallschicht 2 verläuft, das heißt der Dickenrichtung der Flüssigkristallschicht entspricht, während die x- und y-Achse der Breiten- und Längenrichtung der Flüssigkristallschicht 2 entsprechen.

In den nachstehenden Tabellen 2 und 3 sind bevorzugte Ausgangszustände für die Durchlichtbetriebsweise und die Reflexionsbetriebsweise gegeben, wobei unter dem Ausgangszustand der Zustand verstanden wird, der vorhanden ist, wenn kein elektrisches Feld über die felderzeugende Struktur 7 angelegt ist.

T a b e l l e 2: Bevorzugte Ausgangszustände in homogener planarer Orientierung für Durchlichtbetriebsweise

| Ausgangszustand | $\beta$ | $\Delta\varepsilon$ | $d \times \Delta n/\lambda$ | $\alpha_o$ | $\beta_o$ | $\psi$ | $\lvert\psi - \psi'\rvert$ |
|---|---|---|---|---|---|---|---|
| D1 | 0° ± 15° | > 0 | > 0, < 4 | > 0°, < 30° | > 70°, < 90° | 0°, 90° | 90°, 0° bevorzugt 90° |
| D2 | 0° ± 15° | < 0 | > 0, < 4 | > 0°, < 30° | > 0°, < 20° | 0°, 90° | 90°, 0°, bevorzugt 90° |
| D3 | 90° ± 15° | > 0 | > 0, < 4 bevorzugt: $1/2\sqrt{3}$, $1/2\sqrt{15}$, $1/2\sqrt{35}$ | > 0°, < 30° | > 70°, < 90° | 0°, 90° | 0°, 90° bevorzugt 0° |
| D4 | 90° ± 15° | < 0 | > 0, < 4 bevorzugt: $1/2\sqrt{3}$, $1/2\sqrt{15}$, $1/2\sqrt{35}$ | > 0°, < 30° | > 0°, < 20° | 0°, 90° | 0°, 90° bevorzugt 0° |

Tabelle 3: Bevorzugte Ausgangszustände in homogener planarer Orientierung für Reflexionsbetriebsweise

| Ausgangszustand | $\beta$ | $\Delta\varepsilon$ | $d \times \Delta n/\lambda$ | $\alpha_o$ | $\beta_o$ | $\psi$ | $\lvert\psi - \psi'\rvert$ |
|---|---|---|---|---|---|---|---|
| R1 | 0° ± 15° | > 0 | > 0, < 2 bevorzugt 0,36 | > 0°, < 30° | > 70°, < 90° | 0°,90° | 90°, 0° bevorzugt 90° |
| R2 | 0° ± 15° | < 0 | > 0, < 2 bevorzugt 0,36 | > 0°, < 30° | > 0°, < 20° | 0°, 90° | 90°, 0° bevorzugt 90° |
| R3 | 60° ± 5° | > 0 | > 0, < 2 bevorzugt 0,36 | > 0°, < 30° | > 70°, < 90° | 0°, 90° | 0°, 90° |
| R4 | 60° ± 5° | < 0 | > 0, < 2 bevorzugt 0,36 | > 0°, < 30° | > 0°, ≤ 20° | 0°, 90° | 0°,90° |

Es sei hier darauf hingewiesen, daß die Angaben der Werte von $d \times \Delta n/\lambda$ sowie von $\alpha_o$ und von $\beta_o$ Bereichsangaben sind, das heißt, daß die beiden mit dem Zeichen ≧ oder ≦ oder > oder < versehenen Werte jeweils die beiden Bereichsgrenzen angeben, und zwar je nach dem Zeichen unter Einschluß oder Ausschluß dieser Bereichsgrenze.

Bei der Anwendung des elektrooptischen Flüssigkristallschaltelements 1 oder 18 oder 28 zur Veränderung der Helligkeit und/oder Farbe eines Bildpunkts einer elektrooptischen Darstellungseinrichtung bildet das jeweilige Flüssigkristallschaltelement 1 oder 18 gemäß den Figuren 1, 2 oder 3 einen einzigen Bildpunkt, so daß eine große Vielzahl solcher Flüssigkristallschaltelemente 1, 18 oder 28 zu einem Bildschirm integriert ist, wobei natürlich die Substrate, die Orientierungsschichten, die Polarisatoren, die Analysatoren bzw. die Polarisatoren/ Analysatoren, die Reflektoren und die optischen Kompensatoren, die in den Figuren 1 bis 3 aus Darstellungsgründen als Einzelteile gezeichnet sind, jeweils ein für alle Bildpunkte gemeinsames, vorzugsweise einstückiges, Bauteil bilden, während jeder einzelne Bildpunkt seine eigene felderzeugende Struktur 7 hat. Diese felderzeugende Struktur kann, sofern sie keine Kammstruktur der in den Figuren 1 bis 3 dargestellten Art ist, auch aus insgesamt über die gesamte Fläche der elektrooptischen Darstellungseinrichtung hindurchgehenden Streifen- oder Linienelektroden aufgebaut sein, sofern sie in entsprechender Weise, beispielsweise im Zeitmultiplexverfahren schnittpunktweise angesteuert wird.

Es seien nachstehend bevorzugte Größen für die Flüssigkristallschaltelemente angegeben, die insbesondere für den Fall gelten, wenn die Flüssigkristallschaltelemente als Bildpunkte in einer elektrooptischen Darstellungseinrichtung verwendet werden:

| | |
|---|---|
| Dicke der Flüssigkristallschicht: | 1 µm bis 10 µm |
| Flächige Größe der einem Bildpunkt entsprechenden felderzeugenden Struktur: | Quadrat mit einer Kantenlänge von 10 µm bis 1 mm |
| Abstand zwischen benachbarten Streifen- oder Linienelektroden: | 2 µm bis 50 µm |
| Spannung zwischen benachbarten Streifen- oder Linienelektroden bei maximalem Kontrast: | 1 Volt bis 80 Volt |

Es sei darauf hingeweisen, daß das Anbringen einer Polarisationsfolie, das heißt des Polarisators/Analysators 22 vor dem reflektiven Flüssigkristallschaltelement 18 oder 28 parallelen Polarisatoren 15, 16 (das heißt einem in der Durchlaßrichtung zum Polarisator 15 parallelen Analysator 16) entspricht. Die Verwendung eines reflektiven Flüssigkristallschaltelements 18 oder 28, in Kombination mit einem polarisierenden Strahlteiler (McNeille-Prisma) entspricht gekreuzten Polarisatoren 15, 16 in dem transmissiven Flüssigkristallschaltelement 1. Diese Anordnung eignet sich insbesondere für lichtstarke Projektoren.

Die Funktionsweise, insbesondere das optische Verhalten, der beschriebenen Flüssigkristallschaltelemente 1 und 18 sowie 28 wurde mittels Computersimulation untersucht und durch experimen- telle Untersuchung von entsprechend ausgebildeten Flüssig- kristallschaltelementen bestätigt.

Die Ergebnisse dieser Untersuchungen sind in den Figuren 6 und 7 wiedergegeben, und in Figur 8 ist das Ergebnis einer Vergleichsuntersuchung an einem TN-Flüssigkristallschalt- element, also einem bekannten Flüssigkristallschaltelement mit spiralig-nematischem Flüssigkristall, wiedergegeben.

Das dem Untersuchungsergebnis der Figur 6 zugrundeliegende Flüssigkristallschaltelement mit dem Aufbau gemäß den Figuren 1 und 2 hatte folgende Auslegungsgrößen:

| | |
|---|---|
| Dicke der Flüssigkristallschicht | = 6,9 µm |
| Dielektrizitätsanisotropie | = -1,5 |
| Optische Weglänge $d \times \Delta n/\lambda$ | = 0,865 |
| Ausgangsverdrillungswinkel $\beta$ | = 0° |
| Ausrichtungswinkel $\beta_o$ | = 5° |
| Anstellwinkel $\alpha_o$ | = 5° |
| Winkel zwischen Polarisator und Analysator | = 90° |

Zu den Figuren 7 und 8 ist folgendes erläuternd hinzuzufügen:

Der Winkel THETA ist der Winkel zwischen der Beobachtungsrichtung und der Senkrechten auf der Flüssigkristallschicht. Auf den Achsen der Polarkoordinatendarstellung ist die Intensität des Transmissionslichts angegeben. Die Transmission beträgt für senkrechte Inzidenz ca. 25%.

Es sei darauf hingewiesen, daß im elektrooptischen Schaltelement 1 gemäß Figur 1 und 2 bei Verwendung von zum Beispiel flüssigkristallinen Polymeren die Orientierungsschicht 6 und das Substrat 4 gegebenenfalls entfallen können. Entsprechend können die Ausführungsformen der elektrooptischen Schaltelemente für Reflexionsbetriebsweise modifiziert werden. Der Begriff "Flüssigkristall" umfaßt daher in der vorliegenden Beschreibung und in den Ansprüchen auch flüssigkristalline Polymere oder andere flüssigkristalline Substanzen.

Die bei der Erfindung verwendeten Flüssigkristalle sind vorzugsweise, jedoch keineswegs ausschließlich, nematische Flüssigkristalle oder nematische flüssigkristalline Polymere.

## Patentansprüche

1. Elektrooptisches Flüssigkristallschaltelement, umfassend eine Flüssigkristallschicht (2) mit wenigstens einem Substrat (3) und einen Polarisator und Analysator (15, 16; 22) sowie eine auf dem Substrat (3) angeordnete Elektrodenstruktur (7) zum Erzeugen eines elektrischen Feldes, welches eine überwiegend parallel zur Flüssigkristallschicht (2) ausgerichtete Feldkomponente hat, wobei
   (a) die Flüssigkristallschicht (2) eine verdrillbare Struktur aufweist und die Richtung der Polarisation von Licht, welches durch die Flüssigkristallschicht (2) hindurchgeht, vom Verdrillungsgrad der Flüssigkristallschicht (2) abhängt;
   (b) die Flüssigkristallschicht (2) in einer Ausgangsorientierung verankert ist, in welcher ihre Verdrillungsachse senkrecht oder im wesentlichen senkrecht zur Flüssigkristallschicht (2) bleibt; und
   (c) die überwiegend parallel zur Flüssigkristallschicht (2) ausgerichtete Feldkomponente der Elektrodenstruktur (7) derart veränderbar ist, daß damit der Verdrillungsgrad der Flüssigkristallschicht (2) verändert wird;

   dadurch **gekennzeichnet**, daß die Ausgangsorientierung der Flüssigkristallschicht (2) zumindest auf ihrer der Elektrodenstruktur (7) zugewandten Schichtseite einen Anstellwinkel ($\alpha_o$), der größer als 0° und kleiner als 30° ist, mit einer zur Flüssigkristallschicht (2) parallelen Ebene einschließt, so daß sich eine Deformierbarkeit der Flüssigkristallschicht (2) beim Anlegen des elektrischen Feldes in unmittelbarer Nähe der Verankerung der Flüssigkristallschicht ergibt.

2. Elektrooptisches Flüssigkristallschaltelement nach Anspruch 1, dadurch **gekennzeichnet**, daß die überwiegend parallel zur Flüssigkristallschicht (2) ausgerichtete Feldkomponente der Elektrodenstruktur (7) derart veränderbar ist, daß zur kontinuierlichen oder stufenweisen Einstellung unterschiedlicher Lichttransmissionsgrade des Flüssigkristallschaltelements (1, 18, 28) im Bereich zwischen im wesentlichen maximaler und minimaler Lichttransmission der Verdrillungsgrad der Flüssigkristallschicht (2) kontinuierlich oder stufenweise verändert wird.

3. Elektrooptisches Flüssigkristallschaltelement nach Anspruch 1 oder 2, dadurch **gekennzeichnet**, daß die überwiegend parallel zur Flüssigkristallschicht (2) ausgerichtete Feldkomponente einen Ausrichtungswinkel ($\beta_o$), der größer als 0° und kleiner als 90° ist, mit der Vorzugsrichtung bildet, welche die Flüssigkristallschicht (2) auf ihrer der Elektrodenstruktur (7) zugewandten Schichtseite in ihrer Ausgangsorientierung hat.

4. Elektrooptisches Flüssigkristallschaltelement nach Anspruch 3, dadurch **gekennzeichnet**, daß der Ausrichtungswinkel ($\beta_o$) bei positiver Dielektrizitätsanisotropie ($\Delta\varepsilon$) des Flüssigkristalls (2) größer als 70° und kleiner als 90° ist.

5. Elektrooptisches Flüssigkristallschaltelement nach Anspruch 3, dadurch **gekennzeichnet**, daß der Flüssigkristall (2) eine negative Dielektrizitätsanisotropie ($\Delta\varepsilon$) hat, wobei der Ausrichtungswinkel ($\beta_o$) kleiner als 20° und größer als 0° ist.

6. Elektrooptisches Flüssigkristallschaltelement nach einem der Ansprüche 1 bis 5, dadurch **gekennzeichnet**, daß die Elektrodenstruktur (7) Streifen- oder Linienelektroden (9, 10) umfaßt, die parallel zueinander und parallel zur Flüssigkristallschicht (2) verlaufen und alternierend mit einem unterschiedlichen elektrischen Potential beaufschlagt sind.

7. Elektrooptisches Flüssigkristallschaltelement nach Anspruch 6, dadurch **gekennzeichnet**, daß die Streifen- oder Linienelektroden (9, 10) alternierend in wenigstens zwei zur Flüssigkristallschicht (2) parallelen Ebenen angeordnet sind.

8. Elektrooptisches Flüssigkristallschaltelement nach Anspruch 6, dadurch **gekennzeichnet,** daß die mit unterschiedlichem Potential beaufschlagten Streifen- oder Linienelektroden (9, 10) kammartig ineinandergreifend in der gleichen Ebene angeordnet sind.

9. Elektrooptisches Flüssigkristallschaltelement nach einem der Ansprüche 1 bis 8, dadurch **gekennzeichnet**, daß zum Betreiben des elektrooptischen Flüssigkristallschaltelements (1) in Durchlichtbetriebsweise auf der einen Seite der Flüssigkristallschicht (2) der Polarisator (15) und auf der anderen Seite der Analysator (16) vorgesehen ist.

10. Elektrooptisches Flüssigkristallschaltelement nach einem der Ansprüche 1 bis 8, dadurch **gekennzeichnet**, daß zum Betreiben des elektrooptischen Flüssigkristallschaltelements (18, 28) in Reflexionsbetriebsweise auf der einen Seite der Flüssigkristallschicht (2) ein Polarisator/Analysator (22) und auf der anderen Seite ein Reflektor (8a, 19) vorgesehen ist.

11. Elektrooptisches Flüssigkristallschaltelement nach Anspruch 10, dadurch **gekennzeichnet**, daß der Reflektor (8a, 19) ein dielektrischer Spiegel ist.

12. Elektrooptisches Flüssigkristallschaltelement nach Anspruch 11, dadurch **gekennzeichnet**, daß der dielektrische Spiegel (8a) zwischen der Flüssigkristallschicht (2) und dem einen Substrat (3) angeordnet ist.

13. Elektrooptisches Flüssigkristallschaltelement nach einem der Ansprüche 9 bis 12, dadurch **gekennzeichnet**, daß ein doppelbrechender optischer Kompensator (17) zwischen der Flüssigkristallschicht (2) einerseits und dem Polarisator (15) und/oder Analysator (16) oder dem Polarisator/Analysator (22) andererseits vorgesehen ist.

14. Elektrooptisches Flüssigkristallschaltelement nach einem der Ansprüche 1 bis 13, dadurch **gekennzeichnet,** daß die Flüssigkristallschicht (2) einen dichroitischen Farbstoff enthält und auf wenigstens einer Seite derselben ein Polarisator (15) vorgesehen ist.

15. Anwendung des elektrooptischen Flüssigkristallschaltelements nach einem der Ansprüche 1 bis 14 zur Veränderung der Helligkeit und/oder Farbe eines Bildpunkts einer elektrooptischen Darstellungseinrichtung.

16. Anwendung nach Anspruch 15, dadurch **gekennzeichnet**, daß die elektrooptische Darstellungseinrichtung ein Bildschirm ist

17. Anwendung nach Anspruch 15 oder 16, dadurch **gekennzeichnet**, daß die elektrooptischen Flüssigkristallschaltelemente (1, 18, 28) der Darstellungseinrichtung durch eine Transistormatrix angesteuert sind.

18. Anwendung nach Anspruch 15 oder 16, dadurch **gekennzeichnet,** daß die elektrooptischen Flüssigkristallschaltelemente (1, 18, 28) der Darstellungseinrichtung durch eine Direktansteuereinrichtung im Zeitmultiplexverfahren angesteuert sind.

## Claims

1. Electrooptical liquid-crystal switch element, comprising a liquid-crystal layer (2) with at least one substrate (3), and a polarizer and analyser (15, 16; 22), and an electrode structure (7) disposed on the substrate (3) for generating an electric field having a component which is aligned predominantly parallel to the liquid-crystal layer (2),

   (a) the liquid-crystal layer (2) having a twistable structure and the direction of polarization of light which passes through the liquid-crystal layer (2) depending on the degree of twisting of the liquid-crystal layer (2);

(b) the liquid-crystal layer (2) being anchored in an initial orientation in which its axis of twisting remains perpendicular, or essentially perpendicular, to the liquid-crystal layer (2); and

(c) that field component of the electrode structure (7) which is aligned predominantly parallel to the liquid-crystal layer (2) being capable of alteration in such a way that the degree of twisting of the liquid-crystal layer (2) is consequently altered;

characterized in that the initial orientation of the liquid-crystal layer (2), at least on its layer side adjacent to the electrode structure (7), encloses a pitch angle ($\alpha_0$) which is greater than 0° and less than 30° with a plane parallel to the liquid-crystal layer (2), with the result that a deformability of the liquid-crystal layer (2) is produced in the immediate vicinity of the anchoring of the liquid-crystal layer on applying the electric field.

2. Electrooptical liquid-crystal switch element according to Claim 1, characterized in that that field component of the electrode structure (7) which is aligned predominantly parallel to the liquid-crystal layer (2) can be altered in such a way that the degree of twisting of the liquid-crystal layer (2) is altered continuously or stepwise for the purpose of continuously or stepwise setting of different degrees of light transmission of the liquid-crystal switch element (1, 18, 28)) in the range between essentially maximum and minimum light transmission.

3. Electrooptical liquid-crystal switch element according to Claim 1 or 2, characterized in that the field component aligned predominantly parallel to the liquid-crystal layer (2) forms an alignment angle ($\beta_0$) which is greater than 0° and less than 90° with the preferred direction which the liquid-crystal layer (2) has on its layer side, adjacent to the electrode structure (7), in its initial orientation.

4. Electrooptical liquid-crystal element according to Claim 3, characterized in that the alignment angle ($\beta_0$) is greater than 70° and less than 90° for positive dielectric anisotropy ($\Delta\varepsilon$) of the liquid crystal (2).

5. Electrooptical liquid-crystal switch element according to Claim 3, characterized in that the liquid crystal (2) has a negative dielectric anisotropy ($\Delta\varepsilon$), the alignment angle ($\beta_0$) being less than 20° and greater than 0°.

6. Electrooptical liquid-crystal switch element according to one of Claims 1 to 5, characterized in that the electrode structure (7) comprises strip or line electrodes (9, 10) which extend parallel to one another and parallel to the liquid-crystal layer (2) and are alternately acted on by a different electrical potential.

7. Electrooptical liquid-crystal switch element according to Claim 6, characterized in that the strip or line electrodes (9, 10) are disposed alternately in at least two planes parallel to the liquid-crystal layer (2).

8. Electrooptical liquid-crystal switch element according to Claim 6, characterized in that the strip or line electrodes (9, 10) acted on by different potential are disposed in the same plane so as to intermesh in comb fashion.

9. Electrooptical liquid-crystal switch element according to one of Claims 1 to 8, characterized in that, to operate the electrooptical liquid-crystal switch element (1) in the transmitted-light mode, the polarizer (15) is provided on one side of the liquid-crystal layer (2) and the analyzer (16) on the other side.

10. Electrooptical liquid-crystal switch element according to one of Claims 1 to 8, characterized in that, to operate the electrooptical liquid-crystal switch element (18, 28) in the reflection mode, a polarizer/analyser (22) is provided on one side of the liquid-crystal layer (2) and a reflector (8a, 19) on the other side.

11. Electrooptical liquid-crystal switch element according to Claim 10, characterized in that the reflector (8a, 19) is a dielectric mirror.

12. Electrooptical liquid-crystal switch element according to Claim 11, characterized in that the dielectric mirror (8a) is disposed between the liquid-crystal layer (2) and one substrate (3).

13. Electrooptical liquid-crystal switch element according to one of Claims 9 to 12, characterized in that a birefringent optical compensator (17) is provided between the liquid-crystal layer (2), on the one hand, and the polarizer (15) and/or analyser (16) or the polarizer/analyser (22), on the other.

14. Electrooptical liquid-crystal switch element according to one of Claims 1 to 13, characterized in that the liquid-crystal layer (2) contains a dichroic dyestuff and a polarizer (15) is provided on at least one side of the latter.

**15.** Use of the electrooptical liquid-crystal switch element according to one of Claims 1 to 14 to alter the brightness and/or colour of a pixel of an electrooptical display device.

**16.** Use according to Claim 15, characterized in that the electrooptical display device is a viewing screen.

**17.** Use according to Claim 15 or 16, characterized in that the electrooptical liquid-crystal switch elements (1, 18, 28) of the display device are driven by a transistor matrix.

**18.** Use according to Claim 15 or 16, characterized in that the electrooptical liquid-crystal switch elements (1, 18, 28) of the display device are driven by a direct drive device in time-division multiplexing.

## Revendications

**1.** Elément de circuit électro-optique à cristaux liquides, comprenant une couche de cristaux liquides (2), au moins un substrat (3), un polariseur et un analyseur (15, 16 ; 22), ainsi qu'une structure d'électrodes (7) disposée sur le substrat (3) pour produire un champ électrique qui possède une composante de champ orientée principalement parallèlement à la couche de cristaux liquides (2),

(a) la couche de cristaux liquides (2) présentant une structure rotative, et la direction de polarisation de la lumière qui traverse la couche de cristaux liquides (2) dépendant du degré de rotation de la couche de cristaux liquides (2) ;

(b) la couche de cristaux liquides (2) étant ancrée dans une orientation initiale dans laquelle son axe de rotation reste perpendiculaire ou sensiblement perpendiculaire à la couche de cristaux liquides (2) ; et

(c) la composante de champ de la structure d'électrodes (7) qui est orientée principalement parallèlement à la couche de cristaux liquides (2) pouvant être modifiée de façon que le degré de rotation de la couche de cristaux liquides (2) soit ainsi modifié ;

**caractérisé** en ce que l'orientation initiale de la couche de cristaux liquides (2), au moins sur le côté de la couche qui est tourné vers la structure d'électrodes (7), forme un angle d'incidence ($\alpha_o$), qui est supérieur à 0° et inférieur à 30°, avec un plan parallèle à la couche de cristaux liquides (2), de sorte qu'on obtient une faculté de déformation de la couche de cristaux liquides (2) lors de l'application du champ électrique au voisinage immédiat de l'ancrage de la couche de cristaux liquides.

**2.** Elément de circuit électro-optique à cristaux liquides selon la revendication 1, **caractérisé** en ce que la composante de champ de la structure d'électrodes (7) qui est orientée principalement parallèlement à là couche de cristaux liquides (2) peut être modifiée de façon que le degré de rotation de la couche de cristaux liquides (2) soit modifié en continu ou par paliers, afin de régler en continu ou par paliers des degrés différents de transmission de lumière de l'élément de circuit à cristaux liquides (1, 18, 28) dans la plage comprise entre une transmission de lumière sensiblement maximale et sensiblement minimale.

**3.** Elément de circuit électro-optique à cristaux liquides selon la revendication 1 ou 2, **caractérisé** en ce que la composante de champ orientée principalement parallèlement à la couche de cristaux liquides (2) forme un angle d'orientation ($\beta_o$), qui est supérieur à 0° et inférieur à 90°, avec la direction privilégiée que possède la couche de cristaux liquides (2) dans son orientation initiale sur son côté tourné vers la structure d'électrodes (7).

**4.** Elément de circuit électro-optique à cristaux liquides selon la revendication 3, **caractérisé** en ce que l'angle d'orientation ($\beta_o$) est supérieur à 70° et inférieur à 90° en présence d'une anisotropie diélectrique ($\Delta 2$) positive du cristal liquide (2).

**5.** Elément de circuit électro-optique à cristaux liquides selon la revendication 3, **caractérisé** en ce que le cristal liquide (2) possède une anisotropie diélectrique ($\Delta 2$) négative, l'angle d'orientation ($\beta_o$) étant inférieur à 20° et supérieur à 0°.

**6.** Elément de circuit électro-optique à cristaux liquides selon l'une quelconque des revendications 1 à 5, **caractérisé** en ce que la structure d'électrodes (7) comprend des électrodes en bandes ou en lignes (9, 10), qui s'étendent parallèlement entre elles et parallèlement à la couche de cristaux liquides (2) et sont alternativement sollicitées par un potentiel électrique différent.

7. Elément de circuit électro-optique à cristaux liquides selon la revendication 6, **caractérisé** en ce que les électrodes en bandes ou en lignes (9, 10) sont alternativement disposées dans au moins deux plans parallèles à la couche de cristaux liquides (2).

8. Elément de circuit électro-optique à cristaux liquides selon la revendication 6, **caractérisé** en ce que les électrodes en bandes ou en lignes (9, 10) sollicitées par des potentiels différents sont disposées dans le même plan en s'engageant les unes dans les autres à la manière d'un peigne.

9. Elément de circuit électro-optique à cristaux liquides selon l'une quelconque des revendications 1 à 8, **caractérisé** en ce qu'afin d'exploiter l'élément de circuit électro-optique à cristaux liquides (1) par transmission, le polariseur (15) est prévu sur un côté de la couche de cristaux liquides (2) et l'analyseur (16) sur l'autre côté.

10. Elément de circuit électro-optique à cristaux liquides selon l'une quelconque des revendications 1 à 8, **caractérisé** en ce qu'afin d'exploiter l'élément de circuit électro-optique à cristaux liquides (18, 28) par réflexion, un polariseur/analyseur (22) est prévu sur un côté de la couche de cristaux liquides (2) et un réflecteur (8a, 19) sur l'autre côté.

11. Elément de circuit électro-optique à cristaux liquides selon la revendication 10, **caractérisé** en ce que le réflecteur (8a, 19) est un miroir diélectrique.

12. Elément de circuit électro-optique à cristaux liquides selon la revendication 11, **caractérisé** en ce que le miroir diélectrique (8a) est disposé entre la couche de cristaux liquides (2) et l'un (3) des substrats.

13. Elément de circuit électro-optique à cristaux liquides selon l'une quelconque des revendications 9 à 12, **caractérisé** en ce qu'un compensateur optique biréfringent (17) est prévu entre la couche de cristaux liquides (2) d'une part, et le polariseur (15) et/ou l'analyseur (16) ou le polariseur/analyseur (22) d'autre part.

14. Elément de circuit électro-optique à cristaux liquides selon l'une quelconque des revendications 1 à 13, **caractérisé** en ce que la couche de cristaux liquides (2) contient un colorant dichroïque, et un polariseur (15) est prévu sur au moins un côté de cette couche.

15. Utilisation de l'élément de circuit électro-optique à cristaux liquides selon l'une quelconque des revendications 1 à 14 pour modifier la luminosité et/ou la couleur d'un point d'image d'un dispositif d'affichage électro-optique.

16. Utilisation selon la revendication 15, **caractérisée** en ce que le dispositif d'affichage électro-optique est un écran.

17. Utilisation selon la revendication 15 ou 16, **caractérisée** en ce que les éléments de circuit électro-optiques à cristaux liquides (1, 18, 28) du dispositif d'affichage sont asservis par une matrice de transistors.

18. Utilisation selon la revendication 15 ou 16, **caractérisée** en ce que les éléments de circuit électro-optiques à cristaux liquides (1, 18, 28) du dispositif d'affichage sont asservis par un dispositif d'asservissement direct en multiplexage dans le temps.

FIG. 1

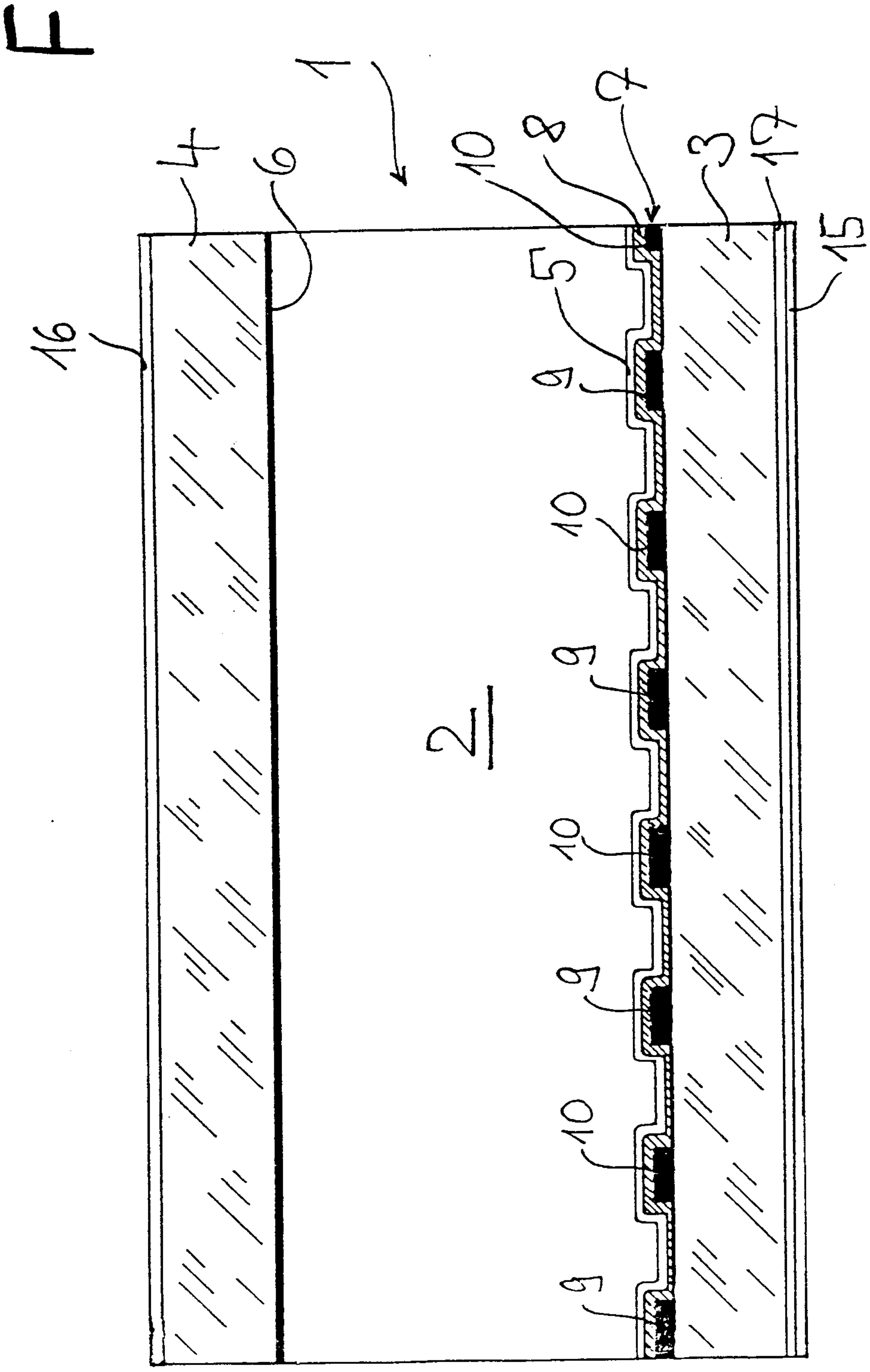

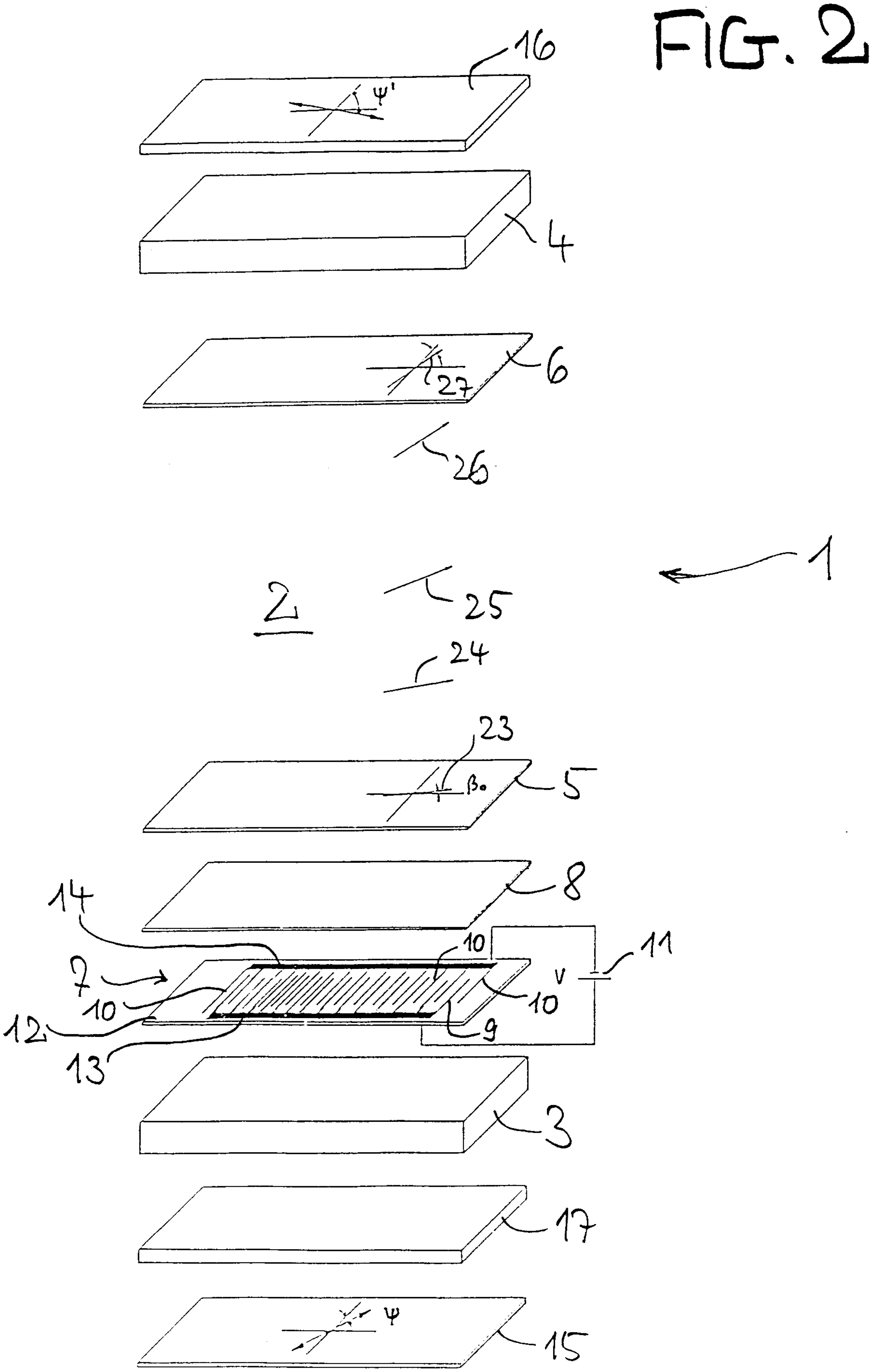


FIG. 2

FIG. 3

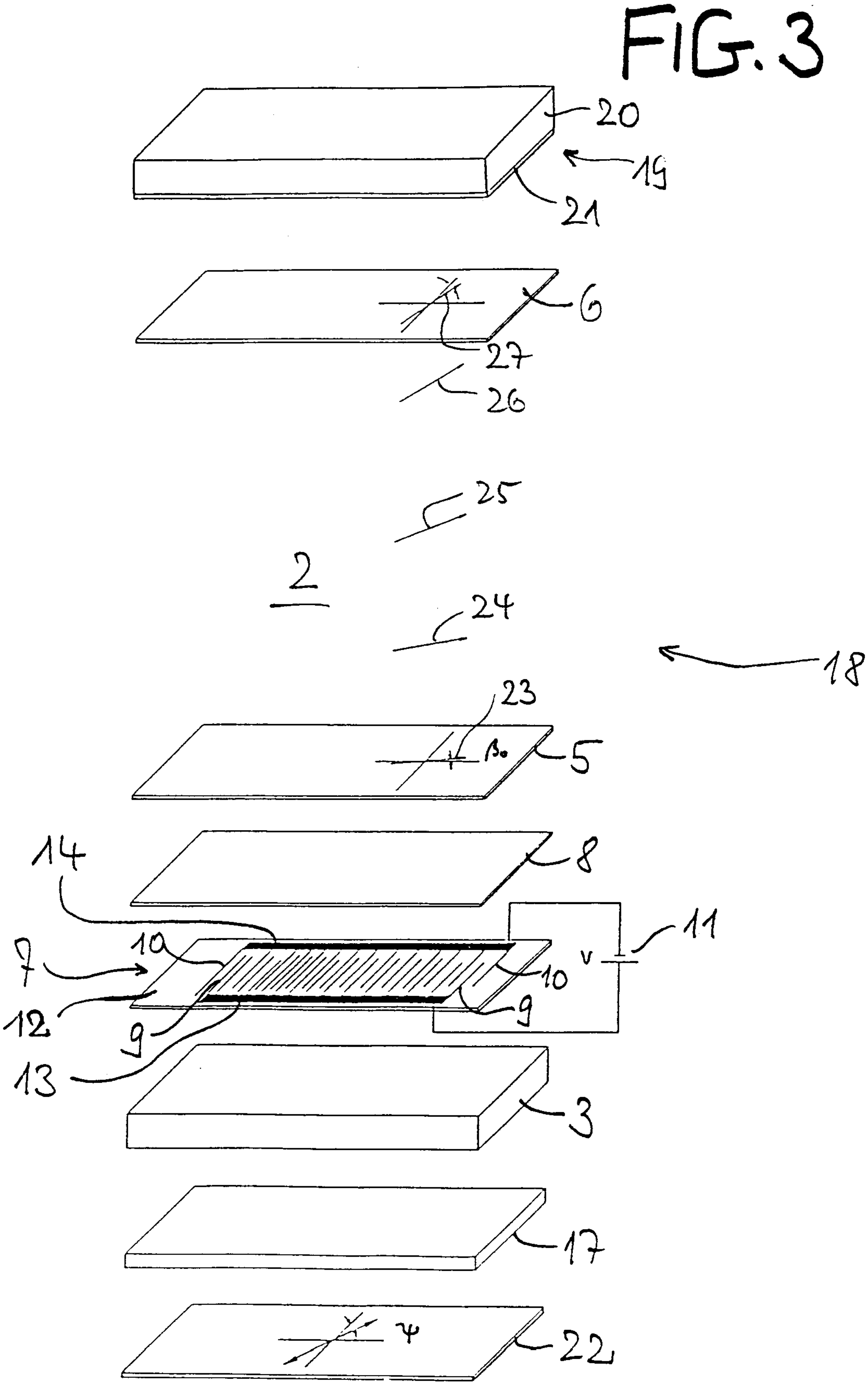

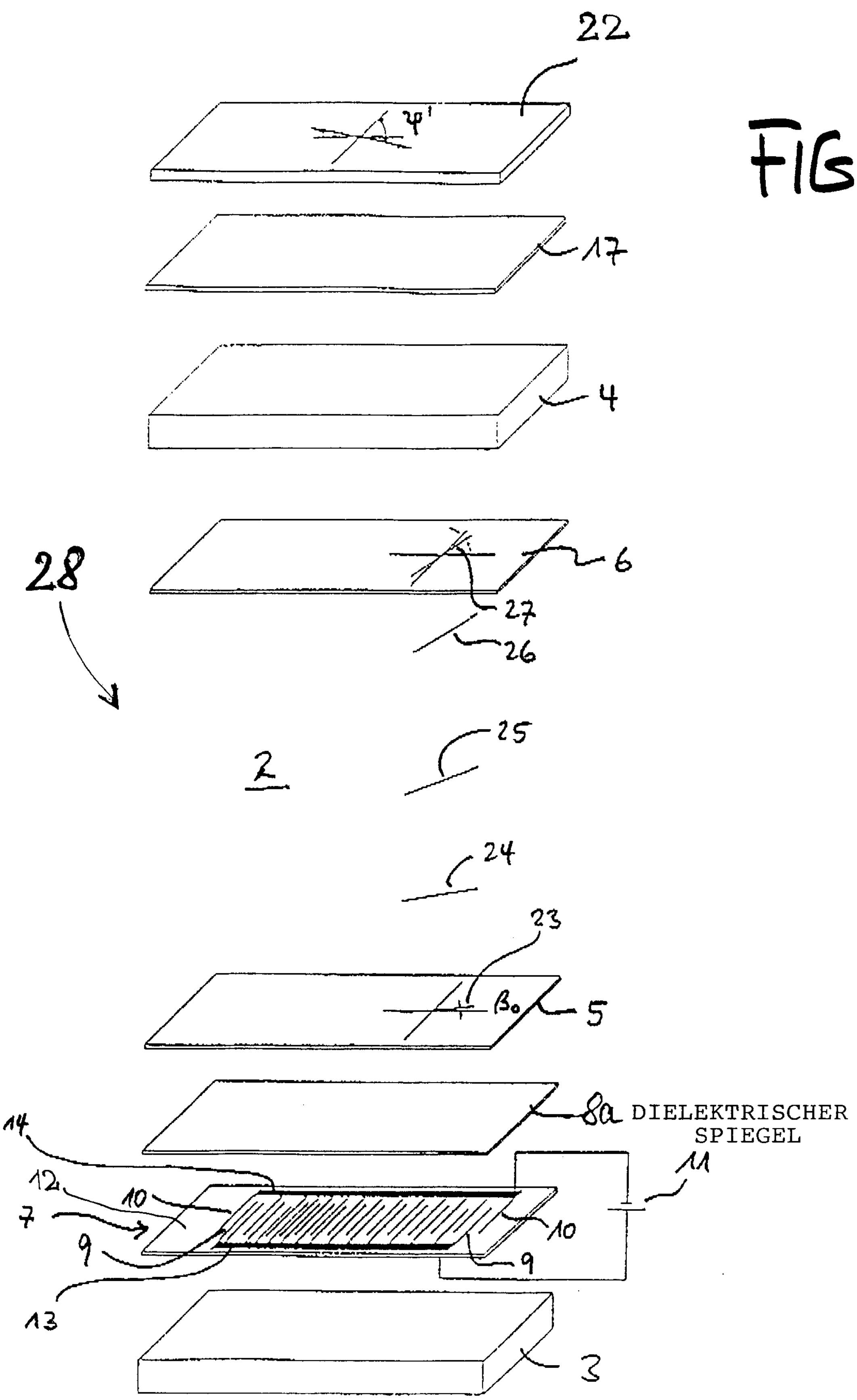
22
φ'
17
4
28
6
27
26
2
25
24
23
β₀
5
8a DIELEKTRISCHER SPIEGEL
14
12
10
7
9
11
10
9
13
3

FIG. 4

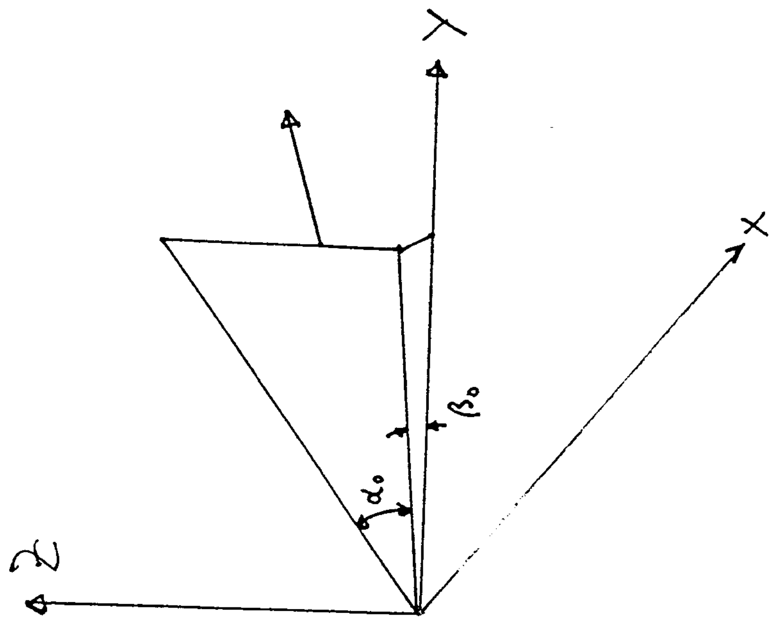


FIG. 5

FIG. 6

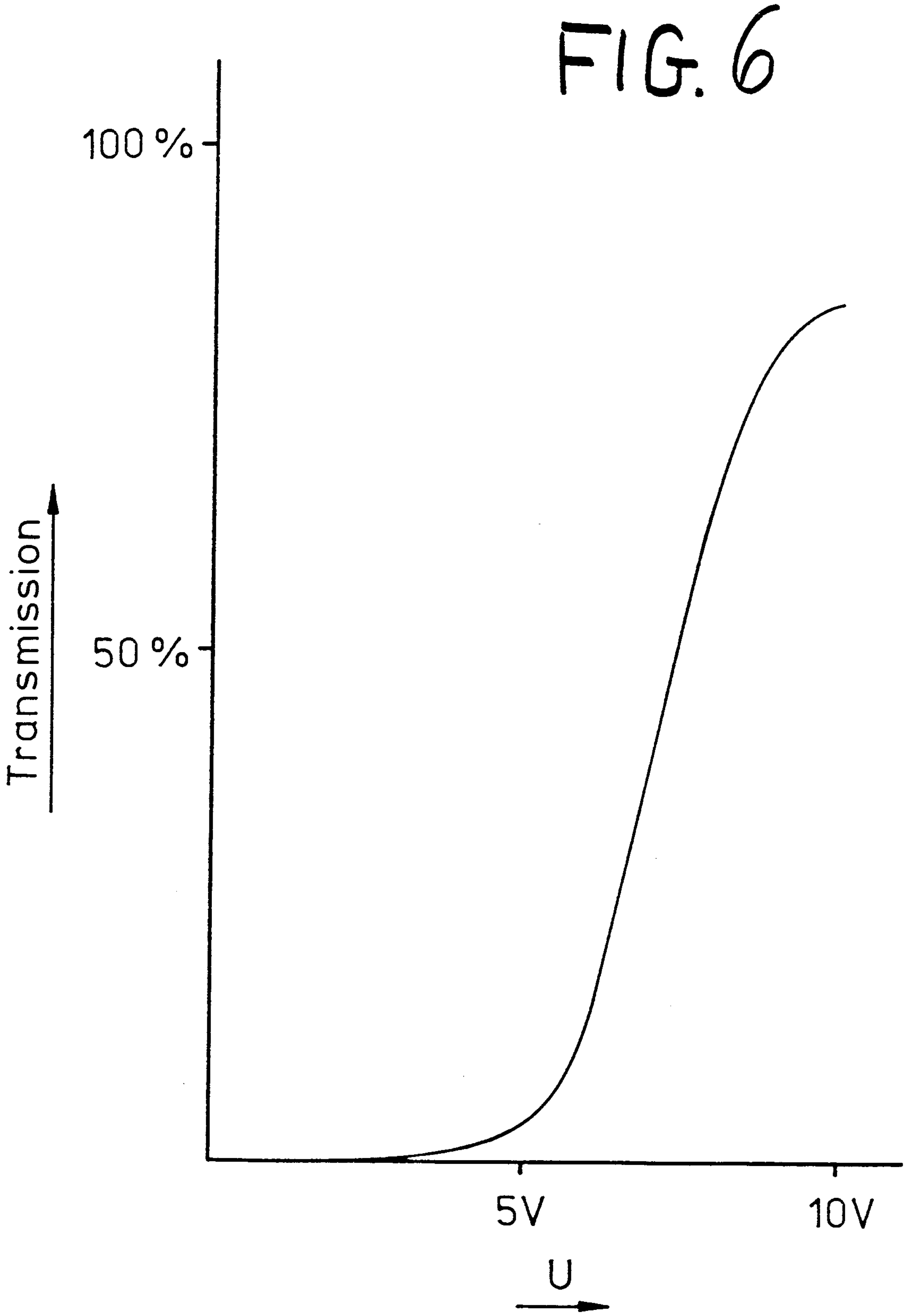

FIG. 7

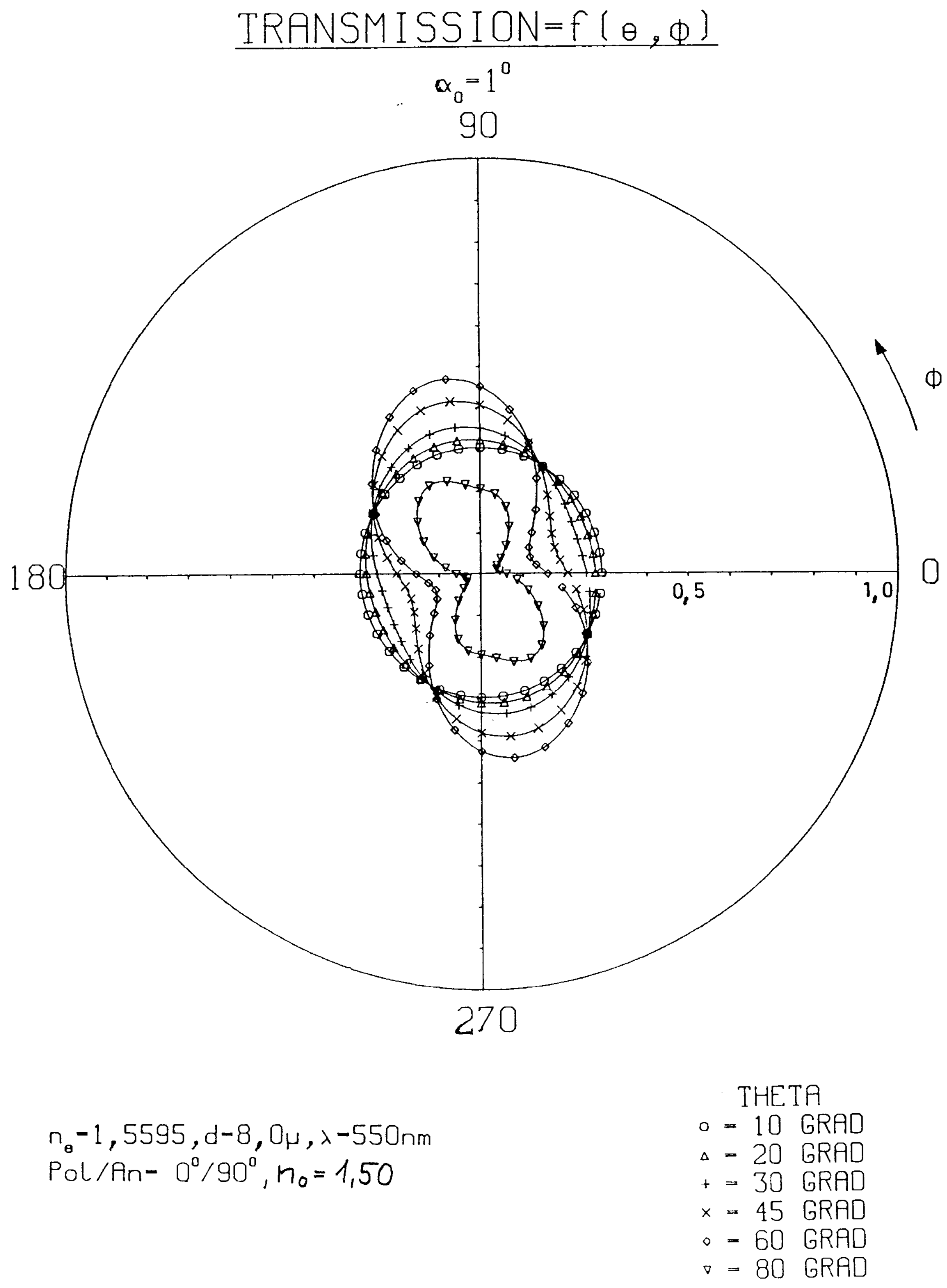


$n_e$=1,5595, d=8,0μ, λ=550nm
Pol/An= 0°/90°, $n_o$= 1,50

FIG. 8

TRANSMISSION=f(θ,φ)

Twist=90°, $\alpha_0$=1°, d/p=0,25

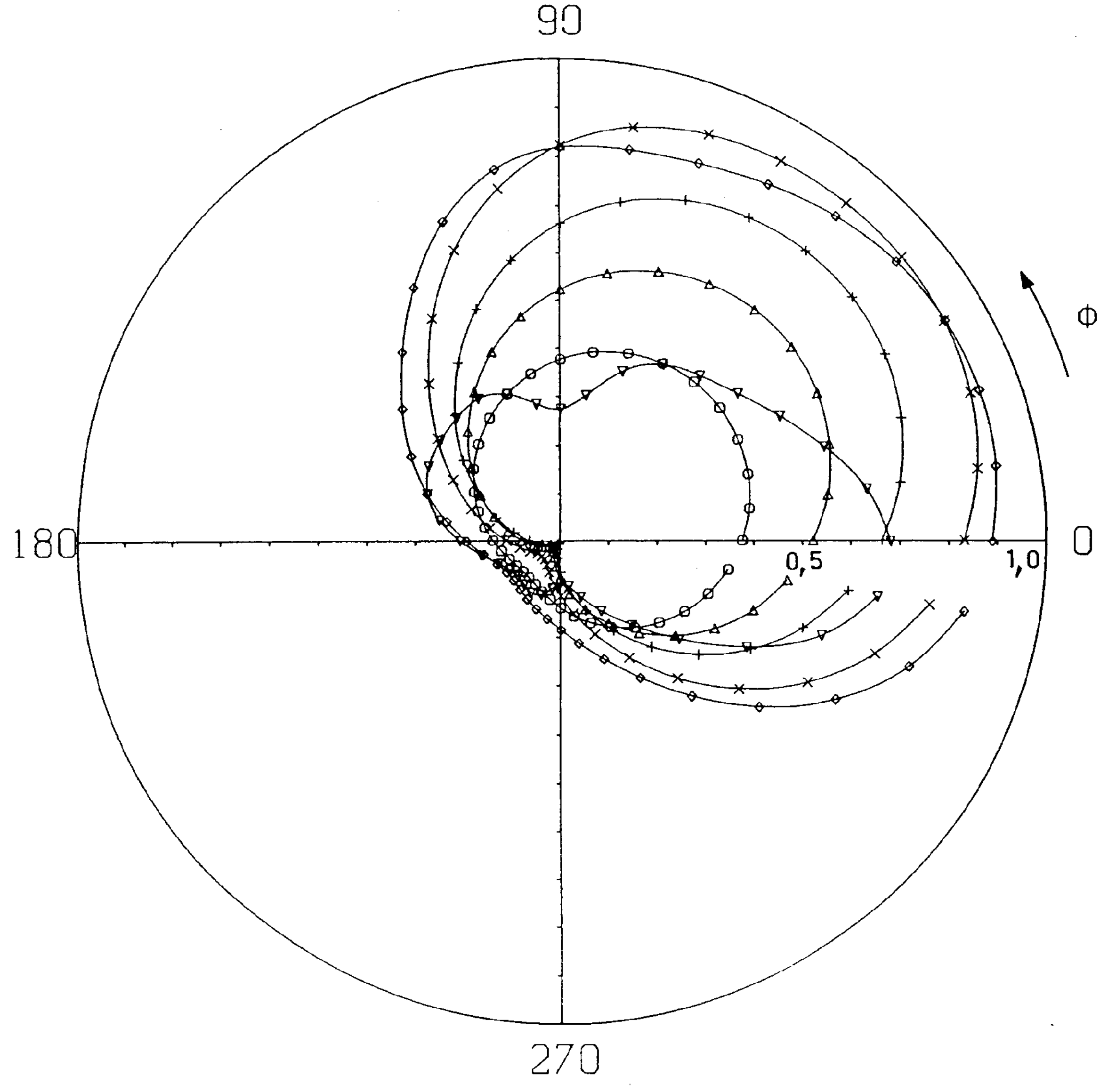


$n_e$-1,5595, d-8,0μ, λ-550nm
Pol/An- 0°/0°, $n_o$ = 1,50

THETA
o - 10 GRAD
△ - 20 GRAD
+ - 30 GRAD
× - 45 GRAD
◇ - 60 GRAD
▽ - 80 GRAD